**Europäisches Patentamt**

**European Patent Office**

**Office européen des brevets**

(19)

(11) Publication number: **0 115 525**
**B1**

# EUROPEAN PATENT SPECIFICATION

(12)

(45) Date of publication of patent specification: **20.09.89**

(51) Int. Cl.⁴: $H\ 01\ M\ 10/34$

(21) Application number: **83902680.4**

(22) Date of filing: **09.08.83**

(86) International application number:
**PCT/US83/01236**

(87) International publication number:
**WO 84/00853 01.03.84 Gazette 84/06**

(54) **NICKEL-CADMIUM BATTERY CELL WITH IMPROVED ELECTROLYTE RESERVOIR.**

(30) Priority: **09.08.82 US 406611**

(43) Date of publication of application:
**15.08.84 Bulletin 84/33**

(45) Publication of the grant of the patent:
**20.09.89 Bulletin 89/38**

(84) Designated Contracting States:
**DE FR GB**

(56) References cited:
**FR-A-1 085 631**
**FR-A-1 211 799**
**FR-A-1 370 561**
**FR-A-2 293 804**
**FR-A-2 298 193**
**GB-A-1 074 998**
**US-A-2 812 376**
**US-A-3 333 986**
**US-A-3 764 387**
**US-A-4 269 913**

(73) Proprietor: **Hughes Aircraft Company**
**7200 Hughes Terrace Bldg. C1, MS A-126**
**P.O.Box 45066**
**Los Angeles California 90045-0066 (US)**

(72) Inventor: **LIM, Hong, S.**
**30446 West Rainbow Court**
**Agoura, CA 91301 (US)**
Inventor: **VERZWYVELT, Scott, A.**
**3086 Lodgewood Street**
**Newbury Park, CA 91320 (US)**

(74) Representative: **Kuhnen, Wacker & Partner**
**Schneggstrasse 3-5 Postfach 1553**
**D-8050 Freising (DE)**

Courier Press, Leamington Spa, England.

# EP 0 115 525 B1

**Description**

This invention is directed to a nickel-cadmium battery cell according to the preamble of claim 1.

Alkaline battery cells are known and a discussion of their properties and particularly the separators are found in Hong S. Lim et al, U.S. Patent No. 4,233,347, Howard H. Rogers, U.S. Patent No. 4,262,061 and Scott A. Verzwyvelt, U.S. Patent No. 4,308,325. In addition, various papers have been published, including "New Separators for Nickel-Cadmium Cells" H. S. Lim et al, published by the American Society of Mechanical Engineers in the "Proceedings of the Sixteenth Intersociety Energy Conversion Engineering Conference", Vol. 1 on August 9, 1981 at pages 182—186.

Among problems that limit the life of nickel-cadmium cells are (1) creation of a situation that there is insufficient amount of electrolyte in separator ("separator dryout") and nickel electrode and (2) electrical short formation due to cadmium deposits in the separator which is caused by cadmium migration from the cadmium electrode into the separator. The partial dryout condition of separator and electrodes is caused by slow expansion of nickel electrode and thereby creates voids in the electrodes. A typical nickel electrode which is used in state-of-art spacecraft nickel-cadmium cells expands by 30 to 40% of the original thickness at the end of its life. Therefore, it is desired to have increased amount of electrolyte in the cell to begin with. The limitation to the increased amount is the fact that (1) there is limited space in the separator for the electrolyte reservoir because of relatively narrow spacing between electrodes and (2) the separator cannot be flooded with electrolyte because oxygen gas passage is needed through the separator. If the oxygen gas passage is impeded, oxygen pressure may build-up to an unacceptable level (for example, rupture the case by high pressure). In state-of-art spacecraft batteries typical values of separator (nylon or polyproylene felts) thickness between the nickel and cadmium electrodes range from 150 to 200 um while those of the electrodes range 650 to 1000 um. Therefore, 20% expansion of nickel electrode, for example, should create enough void volume in the electrode to change the electrolyte distribution significantly and also compact the separator and thereby reduce the electrode spacing significantly.

Batteries with such cells can be used in spacecraft. While long-life spacecraft carry solar-electric cells, the spacecraft are periodically eclipsed so that a battery is necessary for continuous power supply in the spacecraft. Furthermore, in spacecraft it is essential to maximise output with respect to weight because of the expense of lifting weight into orbit. Spacecraft cells thus have moved along a development path which reduces weight by minimizing electrode an separator thickness. A long-life nickel-cadmium battery is desired for long-life spacecraft, such as geosynchronous communication satellites. In the past, the life of the satellite has sometimes been limited by the life of the battery.

In order to aid in the understanding of this invention it can be stated in essentially summary form that it is directed to an alkaline battery cell wherein a larger spacing between the electrodes and a correspondingly thicker separator in the interelectrode spacing are provided.

This increased separator spacing is opposite to state-of-art practice where separator spacing is minimized to reduce the resistive component across the separator. In the prior art, the resistive component increases proportionately with increasing separator spacing. Furthermore, prior art battery design minimized separator spacing to reduce the amount of battery electrolyte weight required to fill the separator void areas. However, the present invention allows for a new generation of separator material that allows increased separator spacing without an increased resistive component. That is to say, zirconium oxide based separator structure demonstrates lower resistance than prior art material such as nylon or polypropylene.

US—4,262,061 discloses a nickel-cadmium battery cell according to the preamble of claim 1, US—4,262,061 does disclose zirconium oxide-yttrium oxide cloth materials which are suitable for use as separators having a polymer impregnated therein and a typical separator design of from 0.013-0.015 inches corresponding to about 330 to 380 micrometers. However, said reference does not disclose nor suggest specific electrolyte reservoir spacing measurements to optimize cell conditions, nor make any mention of easing stack compression.

It is thus a purpose of this invention to provide an alkaline battery cell which has a reduced weight by operating through deeper discharge cycles and to enhance the life of the battery cell and the battery in which it is incorporated. This purpose of the invention is achieved by the features of the characterizing clause of claim 1. The dual pore structure of the separator is necessary in order to load the maximum amount of electrolyte in the separator without blocking the oxygen gas passage. Preferred embodiments of the present invention are disclosed and claimed in claims 2 to 7.

Other purposes and advantages of this invention will become apparent from a study of the following portion of this specification, the claims and attached drawings.

FIG. 1 is a perspective view of the battery in accordance with this invention, with the case partially broken away.

FIG. 2 is a side elevational view with the battery case broken away of some of the battery plates and the separators therebetween.

FIG. 3 is a side elevational view of a second preferred embodiment of the battery of this invention, with the case broken away and showing in section some of the battery electrodes and separators as well as an electrolyte reservoir between the electrodes and the case.

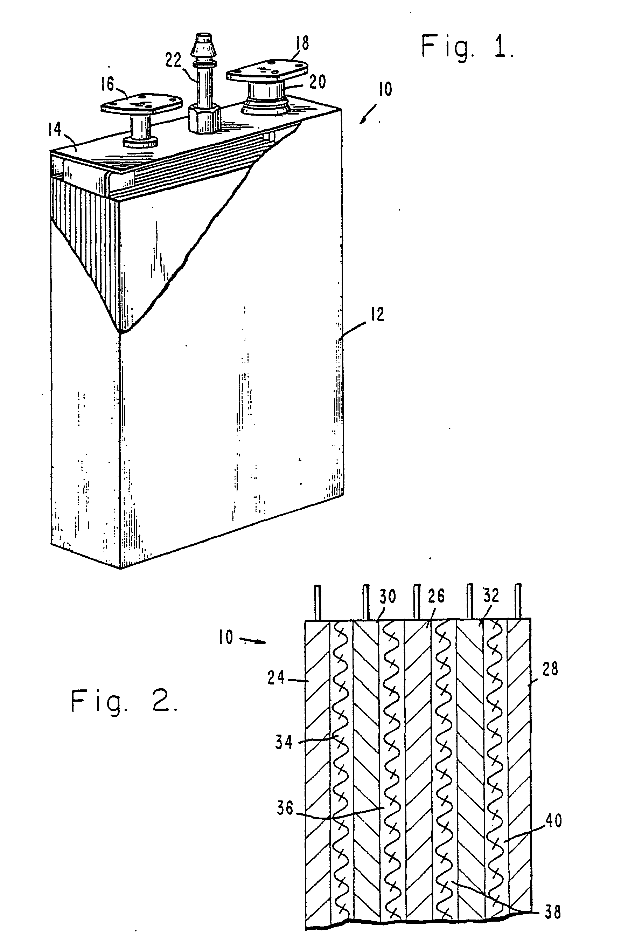

An alkaline battery cell in accordance with this invention is generally indicated at 10 in FIG. 1. The

2

battery cell 10 comprises a case 12 which completely encloses the active and structural elements of the battery therein. Cover 14 has terminal posts 16 and 18. Terminal post 16 is connected to the cover. Terminal post 18 is mounted on insulating bushing 20 so that the terminal post 18 passes through the cover and is insulated with respect thereto. Terminal 18 is the positive terminal. Tube 22 is connected to an opening in the cover 14. This tube is used to fill electrolyte onto the cell.

As is seen in FIG. 2, there is a plurality of battery electrodes and separators within case 12. In the preferred embodiment of the battery of this invention, the negative electrodes are made of cadmium active material imbedded in nickel-sinter plates, the positive material imbedded in nickel sinter plates and the electrolyte is potassium hydroxide solution with or without additives. FIG. 1 shows the stack of electrodes and FIG. 2 shows at least some of the stack of electrodes in an enlarged cross-section. Negative electrodes 24, 26 and 28 are shown and alternate positive electrodes 30 and 32 are shown. Separators 34, 36, 38 and 40 are positioned between the electrodes.

The nickel electrodes are packed with nickel hydroxide which is the electroactive material. The individual electrodes are connected to the terminal post by connector busses individually attached to the electrodes adjacent the top thereof. The busses are collected together and attached to the terminals. See the top edge of the electrodes in both FIGS. 1 and 2.

An ideal class of materials for these reservoir separators is the polymer reinforced zirconia fabrics described in H. S. Lim, H. H. Rogers and S. A. Verzwyvelt, U.S. Patent No. 4,23,347 and Scott A. Verzweyvelt, U.S. Patent No. 4,308,325 and Howard H. Rogers, U.S. Patent No. 4,262,061, the entire disclosures of which are incorporated herein by this reference. The separators have a woven fabric structure with openings up to several hundred micrometers (microns) in diameter, with the openings extending across the fabric. The woven fabric also has small pores of 10 micrometers or less. The small pores are effective for causing this material to strongly retain the electrolyte and compete for it against the porous electrodes. Thus, this material shows high electrolyte retention capability. In addition, the larger openings permit gaseous oxygen bubbles to pass through the separator. The separators thus serves as a porous material which can hold electrolyte and release it as required. The separators serve as a reservoir which should be able to hold enough electrolyte for a combination of the physical changes in the cell, without blocking oxygen passage through them.

The zirconium fabrics provide the desired physical properties, but are too weak for high vibration uses. Zirconia fabrics which are reinforced with polysulfone (Z—PS) or reinforced with polybenzimidazole (Z—PBI) or other organic reinforcing materials are the preferred embodiment for the battery of this invention which is subjected to vibrational stresses, such as found in spacecraft. The polysulfone and polybenzimidazole have been tested and found useful in reinforcing zirconia. It is thought that other polyfluorinated hydrocarbons such as polytetrafluoroethylene (PTFE) would provide the necessary reinforcing and would be stable in potassium hydroxide electrolyte and would also retain considerably more electrolyte than the previously used nylon separator in a dry stack condition. The dry stack condition is a physical condition which occurs when the individual nickel electrodes expand through repeated cycling. This expansion creates pores in the electrode which take the electrolyte away from the separators through capillarly action. Testing found that nickel electrodes with chemically deposited nickel hydroxide expand about 30% of the original thickness after about 3000 charge-discharge ycles at a 60% depth-of-discharge operation. This expansion of the nickel electrode causes squeezing of the separator to express out the electrolyte. Furthermore, the pore distribution changes in the nickel electrodes throughout their life period. New electrodes, especially electro-deposited nickel electrodes showed a high distribution of pores in the diameter range of 0.2 to 10 microns. After 3000 cycles the pore distribution in this range was drastically reduced while the distribution in the range of 0.01 to 0.1 microns was tremendously increased. The smaller pores have a higher retention of the electrolyte so that during ycling release of the electrolyte from the pores is more difficult.

For these several reasons, it is desirable to provide a battery cell which includes a thicker separator and increased amount of electrolyte over the state-of-art cells. The electrode spacing is about 150 to 200 um in present day nickel-cadmium cells employing modern nylon separators. In the present structure, in accordance with this invention, the electrode spacing is more than 200 um, such as 250 um or larger. This spacing is large enough so that the electrode spacing will still be from 150 to 200 um even after a typical (about 680 um thick when new) nickel electrode is expanded by 30%. In the present design, separators which have dual pore structure are used to hold the maximum amount of electrolyte in the given space without blocking the oxygen gas passage. The result is an increase in life-time so that the life of the battery cells in accordance with this invention is up to three times as long as the prior art nickel-cadmium cells with nylon separators. This is because the important life limiting mechanisms are the component dryout caused by the expansion of the nickel electrodes and short formation by cadmium migration as the cell is cycled. The expansion creates the large volume of pores in the nickel electrode in the small pore size range which absorbs the potassium hydroxide electrolyte through capillary action from the separator, which has much larger pore size than the electrodes. As a result of this shift of the electrolyte, the separators in the conventional battery become dry causing functional degradation of the cell. The thicker starting separator thickness with its greater electrolyte capacity improves the life by providing additional electrolyte reservoir capability for this nickel electrodes expansion. Furthermore, the new generation zirconium oxide separator has a dual pore structure where one set of pores is much smaller than the pores in state-of-art nylon and

3

polypropylene separators. This smaller pore structure competes more favorably with the nickel electrode for electrolyte. It has been experimentally demonstrated that zirconium based separators compete much more successfully for electrolyte than nylon or polypropylene separators.

Another life limiting mechanism is the occurrance of internal shorts caused by cadmium migration from the negative cadmium electrode to the separator. The cell becomes shorted when the migrated cadmium is accumulated in the separator in sufficient quantity to form a cadmium bridge between the positive and negative electrodes. The time required for this short formation depends on temperature and electrode separation, which is the thickness of the separator. At the usual 10°C ambient temperature found in spacecraft, cadmium bridging is not usually a life-limiting factor. In uses where the ambient may be 30°C, it may cause shorting. With the increased electrode separation in the cell of the present invention, the life-time of the cell is considerably increased.

The following table compares separator material, nickel electrode manufacturing method and various temperature and depth of discharge conditions with the life obtained in a present day nickel-cadmium cell with nylon separator. The cell types in accordance with this invention which were tested include CD: chemically deposited nickel electrodes, ED: electrochemically deposited nickel electrodes, Z—PS: polysulfone reinforced zirconia separators and Z—PBI: polybenzimidazole reinforced zirconia separators. Cells in accordance with this invention were tested with initial electrode spacing of 300 and 250 micrometers under several temperature test conditions and 40%, 60% and 80% depth of discharge. The last column of the table shows the life expected in state-of-the art nylon cells which is the one described above with initial electrode spacing from 150 to 200 micrometers.

4

TABLE I

| Cell Type | Initial Electrode Spacing Micrometres | Test Conditions | Cycle Life | Cycle Life of State-of-Art Nylon Cell Comparable Test Conditions |
|---|---|---|---|---|
| CD/Z-PS | 300 | 25°C; 40% DOD | >30,000 | 9,800 |
| CD/Z-PS | 300 | 25°C; 40% DOD | >30,000 | 9,800 |
| CD/Z-PS | 300 | 40°C; 40% DOD | 16,252 | 5,200 |
| CD/Z-PS | 300 | 40°C; 40% DOD | 16,262 | 5,200 |
| CD/Z-PS | 300 | 50°C; 40% DOD | 11,415 | 3,700 |
| CD/Z-PS | 300 | 50°C; 40% DOD | 11,415 | 3,700 |
| CD/Z-PS | 300 | 50°C; 40% DOD | 9,680 | 3,700 |
| ED/Z-PS | 250 | 40°C; 60% DOD | 8,276 | 3,200 |
| ED/Z-PS | 250 | 40°C; 60% DOD | 5,838 | 3,200 |
| ED/Z-PBI | 250 | 40°C; 60% DOD | 5,051 | 3,200 |
| ED/Z-PBI | 250 | 40°C; 60% DOD | 5,139 | 3,200 |
| ED/Z-PS | 250 | 25°C; 80% DOD | > 6,800 | 2,500 |
| ED/Z-PBI | 250 | 25°C; 80% DOD | 6,255 | 2,500 |

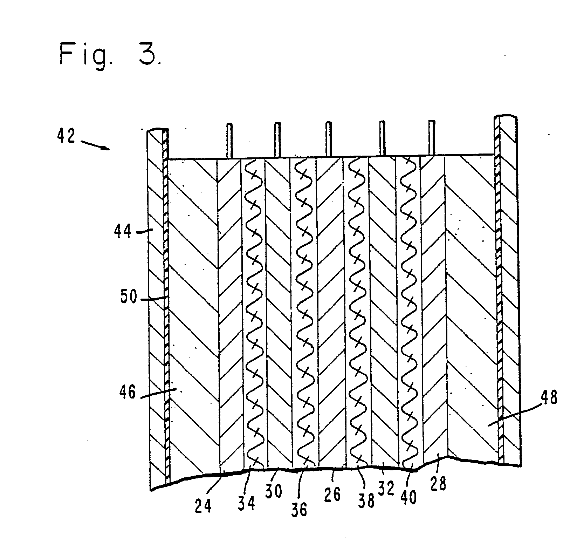

The structure in FIG. 3 illustrates a battery cell 42 wherein the electrolyte reservoir is positioned away from the separators. If desired, separators having more than the minimum thickness may be employed, but in the cell 42 both the additional electrolyte supply and the capability for accommodating the expanding nickel electrodes is achieved outside of the electrode stack. Case 44 contains therein a stack of electrodes and separators the same as illustrated in FIG. 2 with respect to battery cell 10, and they carry the same numbers. Positioned between the outer, negative, cadmium electrodes 24 and 28 and the case 44 are respectively reservoir sponges 46 and 48. If it is desired that the case 42 operate at a different potential than the outer negative electrodes 24 and 28, an insulator sheet 50 may be provided. The insulator sheet 50 is in the form of a sleeve wrapped around the reservoir sponges and electrodes. Polypropylene is a suitable material. Such a sheet may be also employed for the same purpose in battery cell 10.

Reservoir sponges 46 and 48 are structures which are compatible with the potassium hydroxide electrolyte and have the compressibility which permits them to compress when the nickel electrodes expand, and have a pore structure such that they can retain electrolyte without flooding the cell and release the electrolyte as the electrode expands. Suitable materials include polypropylene foam, nickel foam or sinter, polypropylene felt, zirconium oxide cloth, etc. Such material can be made with 80% voids and with a compressive strength sufficiently low that the foam crushes as the nickel electrodes expand. Thus, the compressible material has a dual function. One function is limiting the lateral build-up of forces within the battery cell, in a direction normal to the electrodes. The forces are limited because as the nickel electrodes expand, the foam reservoir sponge crushes so that the separators between the electrodes are not compressed to a smaller thickness. Depending on the material, the crushing may be resilient or non-resilient. The other function is as an electrolyte reservoir in the battery. The pores of the reservoir foam are initially filled with the electrolyte and then the electrolyte is slowly squeezed out as the nickel electrodes expand. The electrolyte squeezed out of the foam will fill the voids which are formed in the nickel electrodes as they expand. By this mechanism, the separator dry-out by loss of the electrolyte is also prevented. With the reduction in electrolyte dry-out in the separators, cadmium migration into the separators is also reduced so that it is reduced as a life limiting mechanism.

## Claims

1. A nickel-cadmium battery cell including a case having a plurality of alternately spaced nickel and cadmium electrodes, which define interelectrode spaces therein; a first electrolyte reservoir in the form of a compressible separator contained within each interelectrode space, said separator having dual pore structure which retains potassium hydroxide electrolyte and permits transit of oxygen gas; electrolyte within each reservoir such that said electrolyte is exposed to each electrode; and an interelectrode spacing greater than 250 micrometers; said separator being substantially confined by and contained within said interelectrode spaciithin said interelectrode spacing, and being formed of a first compressible porous material comprising organic polymer reinforced zirconia fabrics, characterized by a second reservoir containing electrolyte therein, positioned between said case and said plurality of alternately spaced electrodes, said second reservoir being composed of a second compressible porous material consisting of polypropylene foam, nickel foam, or sinter, polypropylene felt, and/or zirconium oxide cloth, said first and second porous material being able to reduce in thickness to accommodate for nickel electrode expansion during repeated electrical cycling of the battery cell.

2. The nickel-cadmium battery cell of claim 1, wherein the separator consists of or comprises polysulfone reinforced zirconia.

3. The nickel-cadmium battery cell of claim 1, wherein the separator consists of or comprises polybenzimidazole reinforced zirconia.

4. The nickel-cadmium battery cell of claim 1, wherein the separator consists of or comprises zirconia reinforced with polyfluorinated hydrocarbons.

5. The nickel-cadmium cell of any of claims 1 to 4 wherein the second reservoir containing electrolyte is composed of nickel foam or nickel sinter.

6. The nickel-cadmium cell of any of claims 1 to 4 wherein the second reservoir containing electrolyte is composed of polypropylene felt.

7. The nickel-cadmium cell of any of claims 1 to 4 wherein the second reservoir containing electrolyte is composed of zirconium oxide cloth.

## Revendications

1. Cellule de batterie nickel-cadmium constituée d'un boîtier comprenant un grand nombre d'électrodes de nickel et de cadmium alternées, définissant des espaces entre les électrodes, un premier réservoir d'électrolyte sous forme d'un séparateur compressible présent dans chaque espace entre les électrodes, ledit séparateur ayant une structure de pores doubles qui retient l'hydroxyde de potassium servant d'électrolyte et permet le transit de l'oxygène gazeux; un électrolyte à l'intérieur de chaque réservoir de sorte que ledit électrolyte soit mis en contact avec chaque électrode; et un espacement entre les électrodes supérieur à 250 micromètres; ledit séparateur étant pratiquement confiné par, et contenu dans, ledit espacement entre les électrodes et étant formé d'une première matière poreuse compressible comprenant des matières textiles à base de zircone renforcées avec un polymère organique, caractérisée en ce qu'elle comprend un second réservoir renfermant de l'électrolyte, placé entre ledit boîtier et la série d'électrodes alternées, ledit second réservoir étant constitué d'une seconde matière poreuse compressible consistant en une mousse de polypropylène, une mousse de nickel ou du nickel fritté, du feutre de polypropylène et/ou une étoffe à base d'oxyde de zirconium, lesdites première et seconde matiéres poreuses pouvant diminuer d'épaisseur pour s'adapter à l'expansion des électrodes de nickel au cours d'un cyclage électrique réptété de la cellule de batterie.

2. Cellule de batterie nickel-cadmium suivant la revendication 1, dans laquelle le séparateur consiste en, ou comprend, de la zircone renforcée avec une polysulfone.

6

3. Cellule de batterie nickel-cadmium suivant la revendication 1, dans laquelle le séparateur consiste en, ou comprend, de la zircone renforcée avec un polybenzimidazole.

4. Cellule de batterie nickel-cadmium suivant la revendication 1, dans laquelle le séparateur consiste en, ou comprend, de la zircone renforcée avec des hydrocarbures polyfluorés.

5. Cellule nickel-cadmium suivant l'une quelconque des revendications 1 à 4, dans laquelle le second réservoir contenant l'électrolyte est constitué d'une mousse de nickel ou de nickel fritté.

6. Cellule nickel-cadmium suivant l'une quelconque des revendications 1 à 4, dans laquelle le second réservoir contenant l'électrolyte est constitué de feutre de polypropylène.

7. Cellule nickel-cadmium suivant l'une quelconque des revendications 1 à 4, dans laquelle le second réservoir contenant l'électrolyte est constitué d'une étoffe d'oxyde de zirconium.

**Patentansprüche**

1. Eine Nickel-Kadmium-Batteriezelle, ein Gehäuse einschließend mit:
einer Mehrzahl von alternierend mit Zwischenraum angeordneten Nickel- und Cadmiumelektroden, die Zwischenelektrodenräume darin bilden; einem ersten Elektrolytreservoir in der Form eines komprimierbaren Separators, der innerhalb jedes Zwischenelektrodenraumes enthalten ist, wobei besagter Separator eine Zweiporenstruktur aufweist, die Kaliumhydroxidelektrolyt zurückhält und den Durchgang von Sauerstoffgas erlaubt; Elektrolyt innerhalb eines jeden Reservoirs, so daß besagter Elektrolyt jeder Elektrode ausgesetzt ist; und einem Zwischenelektrodenraum größer als 250 Mikrometer, wobei besagter Separator im wesentlichen durch besagten Zwischenelektrodenraum begrenzt wird und innerhalb diesem enthalten ist und aus einem ersten komprimierbaren porösen Material gebildet wird, welches mit einem organischen Polymer verstärktes Zirkonoxidgewebe umfaßt, gekennzeichnet durch ein zweites Reservoir, welches Elektrolyt darin enthält und welches zwischen besagtem Gehause und besagter Mehrzahl von alternierend mit Zwischenraum angeordneten Elektroden angeordnet ist, wobei besagtes zweites Reservoir aus einem zweiten komprimierbaren porösen Material zusammengesetzt ist, bestehend aus Polypropylenschaum, Nickelschaum oder Sinternikkel, Polypropylenfilz und/oder Zirkonoxidgewebe, wobei besagtes erstes und zweites poröses Material in der Lage ist, sich in der Dicke zu vermindern, um sich während wiederholter elektrischer Wechselbeanspruchung der Batteriezelle an eine Nickelelektrodenausdehnung anzupassen.

2. Die Nickel-Kadmium-Batteriezelle nach Anspruch 1, wobei der Separator Polysulphon-verstärktes Zirkonoxid enthält oder daraus besteht.

3. Die Nickel-Kadmium-Batteriezelle nach Anspruch 1, worin der Separator Polybenzimidazolverstärktes Zirkonoxid enthält oder daraus besteht.

4. Die Nickel-Kadmium-Batteriezelle nach Anspruch 1, worin der Separator Zirkonoxid, welches mit polyfluorierten Kohlenwasserstoffen verstärkt ist, enthält oder daraus besteht.

5. Die Nickel-Kadmium-Zelle nach einem der Ansprüche 1 bis 4, worin das zweite Elektrolyt enthaltende Reservoir aus einem Nickelschaum oder Sinternickel zusammengesetzt ist.

6. Die Nickel-Kadmium-Zelle nach einem der Ansprüche 1 bis 4, worin das zweite Elektrolyt enthaltende Reservoir aus Polypropylenfilz zusammengesetzt ist.

7. Die Nickel-Kadmium-Zelle nach einem der Ansprüche 1 bis 4, worin das zweite Elektrolyt enthaltende Reservoir aus Zirkonoxidgewebe zusammengesetzt ist.

Fig. 1.

Fig. 2.

Fig. 3.